# EUROPÄISCHE PATENTSCHRIFT

(11) **EP 2 391 816 B1**
(45) Veröffentlichungstag und Bekanntmachung des Hinweises auf die Patenterteilung: **16.01.2013**
(21) Anmeldenummer: 10701324.5
(22) Anmeldetag: 26.01.2010
(51) Int. Cl.: F03B 13/18

(54) **EINRICHTUNG ZUM UMWANDELN DER WELLENENERGIE VON WASSER IN MECHANISCHE UND/ODER ELEKTRISCHE ENERGIE**
DEVICE FOR CONVERTING THE WAVE ENERGY OF WATER INTO MECHANICAL AND/OR ELECTRICAL ENERGY
SYSTÈME SERVANT À TRANSFORMER L'ÉNERGIE DE LA HOULE DANS L'EAU EN ÉNERGIE MÉCANIQUE ET/OU ÉLECTRIQUE

(30) Priorität: 29.01.2009 DE 102009006702
(43) Veröffentlichungstag der Anmeldung: 07.12.2011
(73) Patentinhaber: Ranz, Klaus G., 89075 Ulm (DE); Bärtle, Manfred, 87767 Niederrieden (DE)
(72) Erfinder: RANZ, Klaus G., 89075 Ulm (DE)
(74) Vertreter: Dreiss
(86) Internationale Anmeldenummer: PCT/EP2010/000431
(87) Internationale Veröffentlichungsnummer: WO 2010/086133

(56) Entgegenhaltungen:
- WO-A1-01/96738
- US-A- 1 494 804
- US-A- 4 076 463
- US-A- 4 196 591
- US-A- 5 986 349

## Beschreibung

Die vorliegende Erfindung bezieht sich auf eine Einrichtung zum Erzeugen von mechanischer und/oder elektrischer Energie aus der Wellenenergie von Wasser.

Meereswellen transportieren ihre Energie über Tausende von Kilometern, oberhalb und unterhalb der Wasseroberfläche ohne nennenswerte größere Verluste und sind permanent ganzjährig vorhanden. Diese regenerative Energie zu nutzen, wird durch die zunehmende Knappheit der fossilen Resourcen und des zunehmenden Energiebedarfes auch zum Schutz unserer Umwelt immer notwendiger.

US 5 986 349 A beschreibt eine Vorrichtung zur Wandlung von Wellenenergie in elektrische Energie, bei der eine horizontal lagernde Schwimmkörperringvorrichtung, durch deren Mittelpunkt eine zentrale, höhenverschiebbare Rohrkörpereinheit führt, am Meeresboden verankert ist. Durch Einwirkung von Meereswellen in Horizontalbewegungen versetzt, werden die so entstehenden Drehmomente auf Druck erzeugende Zylindervorrichtungen übertragen, die mit beiden Vorrichtungen verbunden sind. Der so erzeugte Überdruck wird an eine weiterführende Betriebseinheit abgegeben. Nachteilig hieran ist der geringe Wirkungsgrad in der Umsetzung, da in der Hauptsache die Einwirkung des Schweredrucks der Welle oberhalb der Wasserlinie durch Heben und Senken des Schwimmkörpers umgesetzt wird und dabei konträr arbeitende Kräfte auftreten. Auch ist bekannt, dass solche "off shore Anlagen" mit dem großen Risiko der Zerstörung durch Stürme behaftet sind.

US 4 196 591 A beschreibt eine Vorrichtung zur Wandlung von Wellenenergie in elektrische Energie, bei der in der Hauptsache eine auf der Wasseroberfläche schwimmende Schiffs- oder Pontonkörpervorrichtung als Zentraleinheit mittig beweglich mit einer schwenkbaren und vertikal verschiebbaren, am Meeresboden verankerten Rohrkörpervorrichtung verbunden ist. Den Meereswellen ausgesetzt werden die dadurch entstehenden Drehmoment auf Druck erzeugende Bauteile übertragen, die ihren Betriebsdruck zur Wandlung in elektrische Energie an Betriebseinheiten weiterleiten. Auch dort sind der geringe Wirkungsgrad in der Relation zum großen baulichen Aufwand und damit die hohen Kosten nachteilig. Verankerungen der beweglichen Schwimmkörper durch Ankerseile bewirken zusätzlich einen Wirkungsgradverlust. Auch bei dieser Anlage ist das Risiko der Zerstörung durch Wellen nicht auszuschließen.

DE 103 51 186 A1 zeigt ein Wellenkraftwerk, bei dem mittels der Schwenkbewegung eines kreisförmigen Schwimmkörpers und daran befestigter Hydraulikzylinder Hydrauliköl zum Antrieb einer Turbine und einen daran angeflanschten elektrischen Generator gefördert wird.

US 4 423 334 A zeigt einen Wellengenerator, der in Folge Hin- und Herschwenkens eines Gewichtkörpers in zwei Permanentmagneten elektrische Energie erzeugt.

US 4 076 463 A zeigt ein Wellenkraftwerk, das durch eine in einem Schwimmer angeordnete Druckkolbeneinheit in Folge ihrer Hub- und Senkbewegung das Wasser zu einem Generator pumpt und damit elektrische Energie erzeugt.

Es ist Aufgabe der vorliegenden Erfindung, eine Einrichtung zum Erzeugen von mechanischer und/oder elektrischer Energie aus Wellenenergie von Wasser der eingangs genannten Art zu schaffen, die alternativ zu den anderen Einrichtungen beziehungsweise Wellenwandlern nicht zerstörbar ist und sich durch einen hohen Wirkungsgrad auszeichnet, indem sie nicht nur die Energien großer Wellen umwandelt, sondern sich auch dadurch auszeichnet, dass durch flexible Anpassung und durch teilweise indifferentes Schwimmverhalten auch mittlere und kleinere Wellenperioden gewandelt werden und somit zur Erhöhung des Gesamtwirkungsgrad beitragen.

Zur Lösung dieser Aufgabe sind bei einer Einrichtung zum Erzeugen von mechanischer und/oder elektrischer Energie aus der Wellenenergie von Wasser die im Anspruch 1 angegebenen Merkmale vorgesehen.

Durch die erfindungsgemäßen Maßnahmen ist erreicht, dass die Wandlung der Wellenenergie von Wasser, beispielsweise Meereswasser, an unterschiedlichen Bereichen der Einrichtung und hier jeweils getrennt erfolgen kann, was zu einem erhöhten Wirkungsgrad führt. Die Einrichtung besitzt in vorteilhafter Weise eine erste Schwimmkörper-Vorrichtung, die sich teilweise oberhalb und teilweise unterhalb der Wasseroberfläche bewegt, sowie eine zweite und eine dritte Schwimmkörper-Vorrichtung, die jeweils für sich zur Energiewandlung geeignet sind. Es ist beispielsweise vorgesehen, dass die erste Schwimmkörper-Vorrichtung mit einem horizontal auf der Wasseroberfläche liegenden, ellipsenförmigen Auftriebskörper und sich anschließender vertikal verlaufender Ringwand als Gewichtskörper versehen ist, der durch einen horizontalen hohlen Ringkörper ebenfalls als Auftriebskörper abgeschlossen sein kann. Alle Bauteile sind dabei fest miteinander verbunden, wobei das obere Schwimmbauteil der ersten Schwimmkörper-Vorrichtung an ihrer am Wasser liegenden Unterseite zentral mittig mit einem allseitig beweglichen Gelenkbauteil versehen ist. Besonders vorteilhaft ist dabei die ausgewogene Auslegung der Verbindung von Gewichtskraft des Ringwandbauteils und deren Auftriebskraft verbunden mit der zentral mittigen Anordnung des Gelenkbauteils, die es der ersten Vorrichtung ermöglichen, mit labilen Schwimmverhalten auch auf kleinere Wellen beweglich zu reagieren. Dazu trägt auch vorteilhaft die Anordnung von Flügelkörpern bei, die ebenfalls in ihrem Schwimmverhalten indifferent ausgelegt werden.

Ein wesentlicher Vorteil der Erfindung liegt im Hybrid-Wandlersystem, einer hydraulischen Druckerzeugung und Speicherung sowie deren Wandlung in elektrische Energie, insbesondere durch die direkte Umsetzung der Bewegungsenergie in elektrische Energie. Es ist vorgesehen, die zweite Schwimmkörper-Vorrichtung um eine vertikal länglich ausgerichtete und teleskopartig verschiebbar ausgebildete Rohrbaueinheit anzuordnen, die die erste und dritte Schwimmkörper-Vorrichtung miteinander verbindet. Dabei kann durch Schwingungen der Ringkörper der zweiten Schwimmkörper-Vorrichtung durch Eigengewicht und geführt von zwei kegelförmigen Auftriebskörpern zwischen deren unter- und oberseitigen Plattformen horizontal bewegt werden, so dass entweder mechanische Energie oder elektrische Energie erzeugt werden kann.

Ein weiterer wesentlicher Vorteil der Erfindung liegt darin, dass zusätzlich vorgesehen ist, im oberen kegelförmigen Auftriebskörperbauteil mehrere feststehende Zylinderbauteile anzuordnen, deren Kolben nur durch die Zylinderführung geführt sind und über die Innenwandung des ringförmigen Wandbauteils bei Kippbewegungen der ersten Schwimmkörper-Vorrichtung und deren Scherenbewegung zwischen der ersten Schwimmkörper-Vorrichtung und dem rohrförmigen Verbindungsbauteil wandern. Vorteilhaft ist dabei ein langer Kolbenhubweg des integrierten Teleskopbauteiles, was ermöglicht, auch sehr hohe Wellen und den damit verbundenen langen Hub in hydraulischen Überdruck zu verwandeln.

Es ist vorgesehen, die Volumenausdehnung der kegelförmigen Vorrichtung und damit deren Auftrieb größer als das Gewicht der Einrichtung auszugestalten. Die dritte Schwimmkörper-Vorrichtung dient auch als Betriebsraum für Speicher-, Steuer- und Wandlungssysteme. Durch.ihre Mittelachse führt die teleskopartig ausfahrbare Rohrkörperverbindung als vertikale Achse zwischen allen drei Schwimmkörper-Vorrichtungen, wobei das kolbenführende Innenrohr fest mit dem Boden der dritten Schwimmkörper-Vorrichtung verbunden ist.

Weitere vorteilhafte Ausgestaltungen ergeben sich aus den Merkmalen eines oder mehrerer der Ansprüche 2 bis 15.

Weitere Einzelheiten der Erfindung sind der folgenden Beschreibung zu entnehmen, in der die Erfindung anhand der in der Zeichnung dargestellten Ausführungsbeispiele näher beschrieben und erläutert ist. Es zeigen:
- Figur 1: in schematischer längsgeschnittener Darstellung eine Einrichtung zum Erzeugen von mechanischer und/elektrischer Energie aus der Wellenenergie von Wasser gemäß einem ersten Ausführungsbeispiel vorliegender Erfindung und
- Figur 2: eine der Figur 1 entsprechende Darstellung einer Einrichtung zum Erzeugen von mechanischer und/oder elektrischer Energie aus der Wellenenergie von Wasser, jedoch gemäß einem zweiten Ausführungsbeispiel vorliegender Erfindung.

Die in der Zeichnung gemäß zweier Ausführungsbeispiele dargestellte Einrichtung 10 beziehungsweise 110 dient zur Erzeugung von mechanischer und/oder elektrischer Energie aus der Bewegung von Wasser beziehungsweise zur Umwandlung der Wellenenergie von Wasser in nutzbare mechanische und/oder elektrische Energie. Die Einrichtung 10 beziehungsweise 110 schwimmt im Wasser insbesondere im Meer, wobei die bewegte mittlere horizontale Wasseroberfläche beziehungsweise Wasserlinie in der Zeichnung mit der Bezugsziffer 8 beziehungsweise 108 angedeutet ist. Die Einrichtung 10 beziehungsweise 110 nutzt zur Energieerzeugung beziehungsweise Energieumwandlung die Bewegung des Wassers also insbesondere die der Wellen des Meerwassers bzw. der Meere.

Die Einrichtung 10 beziehungsweise 110 ist in drei Schwimmkörper-Vorrichtungen 11, 19 und 28 beziehungsweise 111, 119 und 128 jeweils aus Metall unterteilt, die oberhalb und unterhalb der Wasserlinie 8 beziehungsweise 108 beweglich miteinander verbunden sind und insgesamt am Meeresboden 9 bzw. 109 verankert sind. Diese Schwimmkörper-Vorrichtungen bewegen sich in hubartigen und/oder beispielsweise sinusförmigen Bewegungen hin und her, so dass sie in der Lage sind, die auf sie ausgeübten kinetischen Wasserwellenenergien auf mechanische und/oder elektrische in nutzbarer Weise energieerzeugende Einheiten zu übertragen, so dass sich auf diese Weise ein Hybrid-Wandlersystem ergibt.

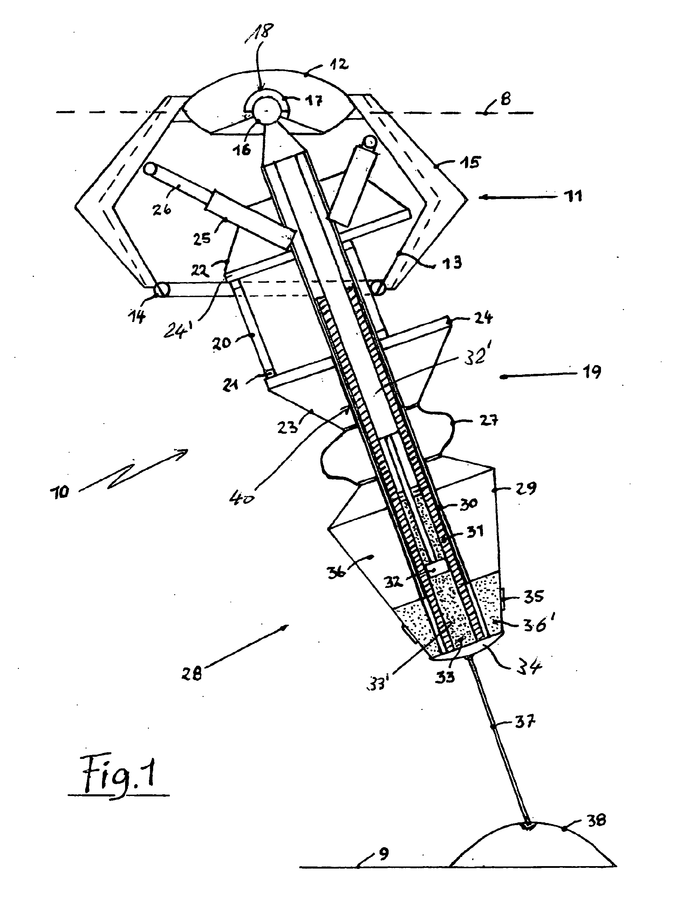

Gemäß Figur 1 besitzt die erste Schwimmkörper-Vorrichtung 11 der Einrichtung 10 einen horizontal auf der Wasserlinie 8 liegenden ellipsenförmigen Schwimmkörper 12, der als Auftriebskörper ausgelegt ist und der einen nach unten gerichteten untertassenartig verlaufenden Seitenwandkörper 13 als Gewichtskörper aufweist, der im Schnitt gesehen etwa winklig schräg verläuft, und zwar derart, dass er zunächst radial nach außen und dann wieder radial nach innen gerichtet ist. Dabei ist am dem Schwimmkörper 12 abgewandten unteren radial inneren Ringrand ein hohler, runder ringförmiger Auftriebskörper 14 vorgesehen ist. An der Außenseite des umlaufenden Seitenwandkörpers 13 sind mehrere über den Umfang verteilt angeordnete stegartig radial abstehende Flügelkörper 15 angebracht, die in ihrer Formgestaltung und Anordnung so ausgelegt sind, dass die erste Schwimmkörper-Vorrichtung 11 anlaufende Wellen komprimiert werden und somit den auf sie wirkenden Druck erhöhen. Die mit dem oberen Schwimmkörper 12 verbundenen Körper 13, 14 und 15 sind in ihrem Verdrängungsvolumen und Eigengewicht so ausgelegt, dass sie in ihrem Schwimmverhalten sich labil bewegen und somit den geringst möglichen Einfluss auf das Schwimmverhalten des Schwimmkörpers 12 nehmen.

Zentral mittig an der Unterseite des horizontal auf der Wasserlinie lagernden beziehungsweise schwimmenden Schwimmkörpers 12 ist ein allseitig bewegliches Gelenkbauteil 18 beispielsweise hier in Form eines Kugelgelenks vorgesehen, das eine am Schwimmkörper 12 gehaltene Kugelkopfpfanne 17 aufweist, in der ein zentraler Kugelkopf 16 schwenkbar beweglich aufgenommen ist, der am oberen Ende eines axialen sich längs erstreckenden, rohrförmigen, teleskopartigen Bauteils 40 befestigt ist. Das Gelenkbauteil 18 bildet die bewegliche Verbindung zwischen der ersten Schwimmkörper-Vorrichtung 11 und dem axialen teleskopischen Bauteil 40, das mittig durch die zweite Schwimmkörper-Vorrichtung 19 führt und in die dritte Schwimmkörper-Vorrichtung 28 zumindest eintaucht, so dass gleichfalls eine bewegliche Verbindung zwischen der ersten Schwimmkörper-Vorrichtung 11 und der zweiten sowie dritten Schwimmkörper-Vorrichtung 19, 28 gebildet ist.

Durch das ausbalancierte Schwimmverhalten der Bauteile der ersten Schwimmkörper-Vorrichtung 11 ist es dem oberen Schwimmkörper 12 möglich, auf alle ihn erfassenden Wellen mit einer Hub-, Schub- und/oder Kippbewegung unmittelbar zu reagieren, so dass es auch zu einer Art von Scherenbewegung zwischen der ersten Schwimmkörper-Vorrichtung 11 und dem axialen Bauteil 40 und mit der von ihm durchdrungenen zweiten Schwimmkörper-Vorrichtung 19 kommt.

Die an der Unterseite der ersten Schwimmkörper-Vorrichtung 11 anschließende zweite Schwimmkörper-Vorrichtung 19, die das axiale Bauteil 40 umgibt, besitzt einen hülsenartigen Ringkörper 20 aus Metall, der um das axiale Bauteil 40 angeordnet ist und gegenüber diesem in allen radialen Richtungen hin und her beweglich ist. Die Metallhülse 20 ist von einer oberen Deckplatte 24' und einer unteren Bodenplatte 24, die rechtwinklig zum axialen Bauteil 40 verlaufen und von diesem durchdrungen sind, radial geführt. Beim Ausführungsbeispiel ist die obere Deckplatte 24' an der Unterseite eines Auftriebskörpers 22 und die Bodenplatte 24 auf einem unteren Auftriebskörper 23 gehalten. Beide Auftriebskörper 22 und 23 sind vom axialen Bauteil 40 durchdrungen. Beim Ausführungsbeispiel ist die Metallhülse 20 an ihrer unteren Ringstirn und/oder an ihrer oberen Ringstirn mit Permanentmagneten 21 (von denen nur diejenigen an der unteren Ringstirn gezeigt sind) versehen, die mit nicht im einzelnen dargestellten Magnetspulen zusammenwirken, die in der Bodenplatte 24 und/oder der Deckplatte 24' über deren jeweils gesamten Fläche integriert sind. Auf diese Weise bildet die Metallhülse 20 mit ihren Permanentmagneten 21 zusammen mit der Boden- und/oder Deckplatte 24, 24' mit ihren Magnetspulen einen elektrischen Lineargenerator bei der radialen Bewegung der Metallhülse 20 gegenüber der Bodenbeziehungsweise Deckplatte.

Das rohrförmige axiale teleskopartige Bauteil 40 besitzt einen Außenmantel 30, innerhalb dem ein Rohrkörper beziehungsweise Innenrohr 31 relativ bewegbar gehalten ist, und eine gestuft ausgebildete Kolbenstange 32', die innerhalb des Innenrohrs 31 axial beziehungsweise längsgeführt gehalten ist und deren Hubkolben 32 sich innerhalb einer mit einer Druckflüssigkeit 33 gefüllten Kammer 33' des Innenrohrs 31 auf und ab bewegen kann. Außenmantel 30 und Kolbenstange 32' sind miteinander und mit dem Kugelkopf 16 des Gelenkbauteils 18 bewegungsschlüssig verbunden.

Mit dem Außenmantel 30 ist die zweite Schwimmkörper-Vorrichtung 19 fest und damit bewegungsschlüssig verbunden, und zwar über die beiden Deck- und Bodenplatten 24' und 24, zwischen denen die Metallhülse 20 in allen radialen Richtungen bezüglich des Außenmantels 30 hin und her beweglich ist. Mittelbar oder unmittelbar mit dem Außenmantel 30 sind Druckzylinder 25 mehrerer über den Umfang des Außenmantels 30 angeordneter Kolben-Zylinder-Druckeinheiten befestigt, deren Kolben 26 an der Innenseite des untertassenförmigen Seitenwandkörpers 13 angelenkt sind. Über die Kolben-Zylinder-Druckeinheiten 25, 26 kann durch die Kippbewegungen der ersten Schwimmkörper-Vorrichtung 11 gegenüber dem axialen Bauteil 30 Wellenenergie in mechanische Energie gewandelt werden. Erfährt die zweite Schwimmkörper-Vorrichtung 19 einen sinusförmigen Ausschlag, bewegt sich die Metallhülse 20 durch ihr Eigengewicht, das größer ist als die Anziehungskraft der Permanentmagnete, linear in radialer Ausschlagsrichtung und erzeugt auf diese Weise unmittelbar elektrische Energie beziehungsweise wandelt die mechanische Wellenenergie in elektrische Energie um, die an nicht dargestellte Speichereinheiten abgegeben werden kann.

Die dritte Schwimmkörper-Vorrichtung 28 besitzt einen konusförmigen Auftriebskörper 29, in den das axiale Bauteil 40 in Form des Außenmantels 30 und des Innenrohrs 31 axial und achsmittig eindringt, wobei das Innenrohr 31 bis zum Boden 34 des Antriebskörpers 29 ragt und an diesem befestigt ist. Beim dargestellten Ausführungsbeispiel ist der Außenmantel 30 axial länger als das Innenrohr 31, so dass sich bei einer axialen Relativbewegung zwischen der ersten Schwimmkörper-Vorrichtung 11 und der dritten Schwimmkörper-Vorrichtung 28 die beiden Rohre 30 und 31 axial relativ zueinander bewegen. Damit geht auch eine Bewegung des Kolbens 32 innerhalb der mit Druckflüssigkeit befüllten Kammer 33' des Innenrohrs 31 einher. Der Hubkolben 32 wandelt den auf ihn wirkenden Auftrieb beziehungsweise Abtrieb der ersten Schwimmkörper-Vorrichtung 11 durch seine Hubbewegung in einen hydraulischen Überdruck, der zur Speicherung und anschließendem Antrieb in einen Betriebsraum 36 des Schwimmkörpers 29 geführt ist. Unterhalb des Betriebsraumes 36 befindet sich im Schwimmkörper 29 ein Wasserschleusenraum 36' sowie ein Einstieg 35.

Der Boden 34 der dritten Schwimmkörper-Vorrichtung 28 ist über eine Ankeranordnung in Form eines Ankerseils 37 mit einem Ankerfundament 38 am Meeresboden 9 gehalten. Eine Sicherungsverbindung in Form von Sicherungsseilen 27 besteht zwischen der dritten Schwimmkörper-Vorrichtung 28 und der zweiten Schwimmkörper-Vorrichtung 19, die, wie erwähnt, axial zueinander beweglich sind. Damit ist der Hubweg der ersten und zweiten Schwimmkörper-Vorrichtung 11, 19 gegenüber der dritten Schwimmkörper-Vorrichtung 28 durch die Sicherungsseile 27 begrenzt.

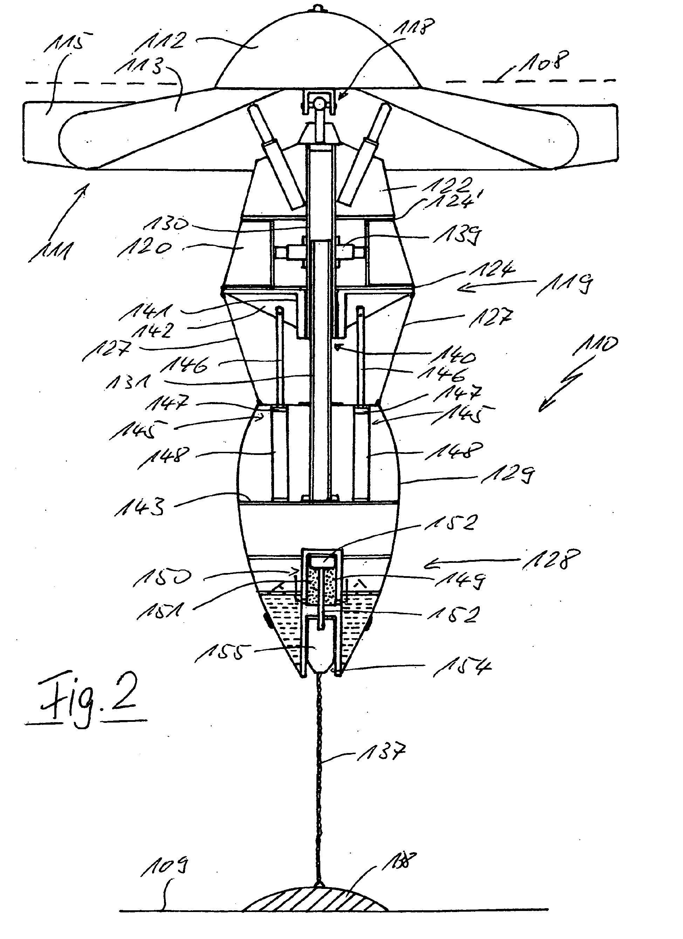

Das in Figur 2 dargestellte zweite Ausführungsbeispiel in Form der Einrichtung 110 ist in seinen Grundzügen entsprechend der Einrichtung 10 nach Figur 1 ausgebildet, so dass entsprechende Bauelemente bzw. Bauteile mit um die Zahl 100 erhöhten Bezugsziffern versehen sind.

Beim dargestellten Ausführungsbeispiel der Figur 2 ist das zwischen der ersten Schwimmkörper-Vorrichtung 111 und dem axialen teleskopischen Bauteil 140 angeordnete Gelenkbauteil 118 als Kardangelenk ausgeführt. Ein weiterer Unterschied besteht in der schirmartigen Ausgestaltung der ersten Schwimmkörper-Vorrichtung 111 beziehungsweise deren Schwimmkörper 112 mit Seitenwandkörper 113 und Flügelkörpern 115.

Die zweite Schwimmkörper-Vorrichtung 119 besitzt lediglich einen oberen Auftriebskörper 122, mit dem die Deckplatte 124' fest verbunden ist, während die Bodenplatte 124 mit einer rohrförmigen Durchführung 141 um das axiale Bauteil 140 bestückt ist. Die Metallhülse 120 ist über Kolbenzylindereinheiten 139, die über den Umfang verteilt radial angeordnet sind und wirken, gegenüber dem axialen Bauteil 140 abgestützt, so dass sich durch die Bewegung der Metallhülse 120 aus der Wellenenergie mechanische Energie ergibt.

Ein weiterer Unterschied besteht darin, dass die Verbindung über axial gerichtete Kolben-Zylinder-Einheiten zwischen der zweiten Schwimmkörper-Vorrichtung 119 und der dritten Schwimmkörper-Vorrichtung 128 nicht über eine einzige Kolbenzylindereinheit axial mittig sondern über vorzugsweise mindestens drei über den Umfang des axialen Bauteils 140 gleichmäßig verteilt angeordnete Kolben-Zylinder-Einheiten 145 erfolgt. Hierzu sind die Kolbenstangen 146 an Verstrebungen 142 der Durchführungshülsen 141 der Bodenplatte 124 senkrecht nach unten gerichtet gehalten, während die Zylinder 148, in denen die Kolben 147 geführt sind, im Schwimmkörper 129 der dritten Schwimmkörper-Vorrichtung 128 angeordnet sind. Das Innenrohr 131 des axialen Bauteils 140 ist an einem Zwischenboden 143 des Schwimmkörpers 129 befestigt, während das obere Ende des Außenmantels 130 mit dem unteren Teil des Gelenkbauteils 118 in Form des Kardangelenks fest verbunden ist.

Die dritte Schwimmkörper-Vorrichtung 128 ist auch hier über Sicherungsseile 127 mit der zweiten Schwimmkörper-Vorrichtung 119 verbunden beziehungsweise in ihrem maximalen Hub gesichert.

Zusätzlich ist beim zweiten Ausführungsbeispiel die Einrichtung 110 beziehungsweise deren dritte Schwimmkörper-Vorrichtung 128 mit einer Dämpfungsvorrichtung 150 versehen, die an der zum Meeresboden 109 gerichteten Unterseite der dritten Schwimmkörper-Vorrichtung 128 angeordnet ist. Innerhalb des unteren Bereichs des Schwimmkörpers 129 ist eine Hydraulikeinheit 151 vorgesehen, deren Kolben 152 innerhalb einer mit Druckflüssigkeit gefüllten Kammer 149 axial bewegbar ist. Die Kolbenstange 152 ragt axial aus der Kammer 149 in eine von unten offene Nut 154, in der ein mit der Kolbenstange 152 fest verbundener Stößel 155 angeordnet ist, der über ein Ankerseil 137 mit dem Ankerfundament 138 am Meeresboden 109 fest verbunden ist. Auf diese Weise kann bei höheren Wellen der Weg des Hubes der gesamten Einrichtung 110 in gedämpfter Weise verlängert werden.

Auch für dieses zweite Ausführungsbeispiel gilt Folgendes:

Die erste Schwimmkörper-Vorrichtung 111 reagiert auf alle sie erfassenden Wellenformationen und deren unterschiedliche Wellenhöhen durch Wipp- oder Hubbewegungen, die in hydraulische Energie umgesetzt, gespeichert und mit konstanten Druck einem Flüssigantrieb mit angeschlossenen Generator zur Erzeugung von elektrischer Energie zugeführt wird. Bei relativ niedrigem Wellengang reagiert die Vorrichtung mit Wipp-Kippbewegungen, was durch das mittig angeordnete, allseitig bewegliche Gelenkbauteil ermöglicht ist. Bei hohen Wellengängen reagiert die Vorrichtung mit Hubbewegungen. Bei Kipp-Wippbewegungen der Vorrichtung 111 bewegt sich ihre schräge Innenseite über feststehende Zylinderkolben beliebiger Anzahl. Die Anordnung der Zylinderbauteile zum Drehpunkt ist so ausgelegt, dass hohe Drehmomente erzeugt werden. Die Hubbewegungen der Vorrichtung, werden ebenfalls auf fest sitzende Zylinderbauteile übertragen, so dass auch hier nur vertikale Bewegungen der Zylinderkolben stattfinden. Die Vorrichtung 111 ist an ihrem Außenrand mit einer beliebigen Anzahl von Flügelkörpern versehen, die in ihrer Anordnung und Ausdehnung
so ausgelegt sind, dass sie die anlaufenden Wellen komprimieren und so den hydrodynamischen Masseschub auf die Vorrichtung verstärken und gleichzeitig auch die Vorrichtung nach der Wellenströmung ausrichten. Durch die überwiegend relativ flache Konstruktion der ersten Schwimmkörpervorrichtung 111 ergibt sich eine bessere Überflutung der Wellen, was so der Vorrichtung einen vorteiligeren Auftrieb verschafft. Bei hohen Wellen wirkt sich die mittige glockenförmige Erhebung der Vorrichtung durch ihr großes Volumen ebenfalls vorteilig aus, ohne bei geringem Wellengang zu behindern.

Von der zweiten Schwimmkörper-Vorrichtung 119 erfährt das obere kegelförmige Bauteil einen Auftrieb, der dazu bestimmt ist das Eigengewicht aufzuheben und Eintauchtiefe sowie Eintauchgrad der ersten Vorrichtung 111 mitzugestalten. Ferner sind im oberen ersten Bauteil vertikal schräg ausgerichtete Kolben-Zylinder-Bauteile im Umfang um die durchgehende Mittelrohrsäule 140 angebracht. Das mittlere zweite Körperbauteil der zweiten Vorrichtung 119 ist ein kreisrunder, unten und oben offener Wandkörperring 120, der sich um das Mittelrohr 140 und zwischen beiden Teilkörper horizontal nach allen Richtungen verschieben kann. Das untere dritte Bauteil ist ein kreisrunder Stützring mit Auflagefläche und schließt mit dem zentral durchgehenden Rohrbauteil ab, mit dem es fest verbunden ist. Die kreisrunde Auflagefläche dient als Gleitplattform für das mittlere Ringbauteil.

Die dritte Schwimmkörper-Vorrichtung 128 ist als Auftriebskörper in seiner Verdrängung so ausgelegt, dass sie bei jeder nur möglichen Fallhöhe der Vorrichtungen 111 und 119 deren Eigengewicht trägt und so ihre Ankerverbindung, die eine Kette 137 oder ein Strang sein kann, zum Fundament 138 am Meeresboden 109 jederzeit auf Zug bleibt. Hierbei ist die Ankerverbindung besonders vorteilhaft. In der geschlossenen oberen Druckkammer, gefüllt mit einem Fluid, und der unteren offenen Kammer, bewegen sich die zwei miteinander verbundene Zylinderkolben nicht, sie verbleiben zusammen mit der Ankerverbindung immer auf gleich bleibender festgelegter Höhe zum Meeresboden. Steuerventile bestimmten ob ein Hydraulik-Überdruck zu oder abzuführen ist. Auf- und Abbewegung vollziehen alleine die Vorrichtung 129 und die mit ihr fest verbundenen Zylinderkammern. Erfährt die ersten Schwimmkörpervorrichtung 111 einen Auftrieb, bleibt das Fluid in der oberen Kammer durch ein Steuerventil geregelt eingeschlossen, so dass die Hub/Zugkraft nur auf Zylinderkolben, die mit der zweiten Vorrichtung 119 verbunden sind, ausgeübt wird. Die dritte Vorrichtung 128 und die Ankerverbindung bleiben auf Zug. Das bleibt so lange bis höhere Wellenbewegungen die erste Vorrichtung 111 überfluten und dann ein höherer Auftriebs/Verdrängungsdruck durch das mittige, glockenförmige Schwimmkörperteil entsteht und wenn die Kolbenstangen der oberen Druckzylinder ihr Ausfahrlimit schon erreicht haben. Dann wird das Steuerventil der oberen Zylinderkammer in der dritten Vorrichtung 128 geöffnet und die Auftriebskraft, die die gesamte Vorrichtung dann erfährt, wird in der oberen Zylinderkammer in einen Überdruck gewandelt und somit der Wirkungsgrad der Gesamtvorrichtung erhöht.

Die Rückführung der dritten Auftriebsvorrichtung 128 in ihre ursprüngliche Ankerposition, geschieht mit folgendem Ablauf: Mit zunehmenden Wellental drückt das Eigengewicht der Vorrichtungen 111 und 119 auf die Vorrichtung 128, die Steuerventile der oberen Druckzylinder verschließen die Zylinderkammern der im Umfang um das mittlere Rohrbauteil angeordneten Zugkolben, gleichzeitig wird dem geteilten Kolben in der unteren Druckkamer Hydraulik-Überdruck zugeführt, so dass auf Grund der Summe des lastenden Gewichts, plus des zugeführten Hydraulikdrucks, sich die Vorrichtung 128 nach unten bis in ihre angestammte Position bewegt und trotzdem immer ein Zug auf die Ankerverbindung gewährleistet ist. Da der Hubweg der beiden Vorrichtungen 111 und 119 länger ist als der Hubweg der Vorrichtung 128, erreicht die Vorrichtung 128 ihre Ankerposition bevor der horizontale Schwimmkörper der Vorrichtung 111 die Wasserlinie 108 erreicht. Das Ventil der unteren Druckkammer wird geschlossen, die Vorrichtung 128 verbleibt in ihrer eingenommenen Ankerposition, gleichzeitig werden die Ventile der oberen Druckzylinder geöffnet, so dass die Vorrichtung 111 in die Wasserlinie 108 so weit eintaucht bis sich ihr Gewicht und ihre beginnende Verdrängung aufheben. Da die Vorrichtung 128 in ihrer Verdrängung so ausgelegt ist, dass ihr Auftrieb um X größer ist als das auf ihr lastende Gewicht der über ihr angebrachten Vorrichtungen 111 und 119, wird die Differenz plus X in Form von Hydraulik-Überdruck der Vorrichtung zugeführt. Durch dieses Konstruktionsprinzip kann auch Wellenenergie von hohen Wellen gewandelt werden, die allein nur noch als Zugkräfte auf die Ankerverbindung wirken und ansonsten nicht hätten umgesetzt werden können, da der begrenzte Hubweg der oberen Zylinder die Energieumsetzung nur im Rahmen ihres Hubweges möglich macht.

## Patentansprüche

1. Einrichtung (10, 110) zum Erzeugen von mechanischer und/oder elektrischer Energie aus der Wellenenergie von Wasser, mit Schwimmkörper-Vorrichtungen (11, 19, 28; 111, 119 128), die teilweise oberhalb und teilweise unterhalb einer mittleren Wasserlinie (8, 108) hin und her schwingen und/oder sich heben und senken und die schwenkbar und/oder längsbeweglich miteinander verbunden sind, und wobei
eine erste Schwimmkörper-Vorrichtung (11, 111), die einen Auftriebskörper (12, 112) und einen Gewichtskörper (13, 113) mit außenseitigen Flügeln (15, 115) aufweist und die über ein Kugel- oder Kardangelenk (18, 118) mit einem axialen vorzugsweise teleskopartigen Bauteil (40, 140) gelenkig verbunden ist, so dass aus der Bewegung zwischen erster Schwimmkörper-Vorrichtung (11, 111) und axialem Bauteil (40, 140) die Wellenenergie in mechanische und/oder elektrische Energie umwandelbar ist; eine zweite Schwimmkörper-Vorrichtung (19, 119), die mit einem vorzugsweise ringförmigen Gewichtskörper (20, 120) bestückt ist, der zwischen einer oberen Deckplatte (24', 124') und einer unteren Bodenplatte (24, 124) gegenüber dem axialen Bauteil (40, 140) radial hin und her beweglich ist und so die Wellenenergie in mechanische und/oder elektrische Energie wandelt; und eine dritte Schwimmkörper-Vorrichtung (28, 128), die zumindest teilweise um das axiale Bauteil (40, 140) angeordnet ist und mit einem Auftriebskörper (29, 129) versehen sowie mit einer Ankeranordnung (37, 137) verbunden ist, wobei die dritte Schwimmkörper-Vorrichtung (28, 128) relativ zur ersten Schwimmkörper-Vorrichtung (11, 111) axial beweglich gehalten und verbunden ist und mit einer die axiale Relativbewegung wandelnden Hydraulikeinheit (32, 32'; 132) versehen ist.

2. Einrichtung nach Anspruch 1, **dadurch gekennzeichnet, dass** die erste Schwimmkörper-Vorrichtung (11, 111) mit der zweiten Schwimmkörper-Vorrichtung (19, 119) mittels über den jeweiligen Umfang angeordneter Kolben-Zylinder-Einheiten (25, 26; 125, 126) kippbeweglich verbunden ist.

3. Einrichtung nach Anspruch 1 oder 2, **dadurch gekennzeichnet, dass** die erste Schwimmkörper-Vorrichtung (11) mit einem oberen Auftriebskörper (13), der das Gelenk (18) aufnimmt, und mit einem zweiten unteren ringförmigen Auftriebskörper (14) versehen ist.

4. Einrichtung nach mindestens einem der Ansprüche 1 bis 3, **dadurch gekennzeichnet, dass** an der zweiten Schwimmkörper-Vorrichtung (19) der radial bewegliche Gewichtskörper (20) an einer oder beider Stirnseiten mit Permanentmagneten (21) bestückt und die Deckplatte (24') und/oder die Bodenplatte (24) mit Magnetspulen versehen sind bzw. ist.

5. Einrichtung nach mindestens einem der Ansprüche 1 bis 3, **dadurch gekennzeichnet, dass** an der zweiten Schwimmkörper-Vorrichtung (119) zwischen dem radial beweglichen Gewichtskörper (120) und dem axialen Bauteil (140) um den Umfang verteilte Kolben-Zylinder-Einheiten (145) vorgesehen sind.

6. Einrichtung nach mindestens einem der vorhergehenden Ansprüche, **dadurch gekennzeichnet, dass** die zweite Schwimmkörper-Vorrichtung (19) mit einem oberen und einem unteren Auftriebskörper (22, 23) versehen ist.

7. Einrichtung nach mindestens einem der vorhergehenden Ansprüche, **dadurch gekennzeichnet, dass** das axial ausgerichtete teleskopische Bauteil (40, 140) einen rohrförmigen Außenmantel (30, 130), der mit dem Gelenk (18, 118) der ersten Schwimmkörper-Vorrichtung (11, 111) fest verbunden ist, und ein Innenrohr (31, 131), das mit der dritten Schwimmkörper-Vorrichtung (28, 128) fest verbunden ist, aufweist, wobei Außenmantel (30, 130) und Innenrohr (31, 131) axial beweglich zueinander sind.

8. Einrichtung nach Anspruch 7, **dadurch gekennzeichnet, dass** mit dem Außenmantel (30, 130) mindestens ein Kolben einer Kolben-Zylinder-Einheit (32, 132), deren Zylinder zumindest teilweise in der dritten Schwimmkörper-Vorrichtung (28, 128) unbeweglich angeordnet ist, bewegungsschlüssig verbunden ist.

9. Einrichtung nach Anspruch 8, **dadurch gekennzeichnet, dass** innerhalb des Außenmantels (30) und mit diesem bewegungsschlüssig verbunden eine Kolbenstange (32') angeordnet ist, deren Hubkolben (32) innerhalb einer Kammer (33') des Innenrohrs (31) axial bewegbar ist, wobei die Kammer (33') mit einem Hydraulikmedium (33) gefüllt ist und beidendig mit einem Betriebsraum in der zweiten Schwimmkörper-Vorrichtung (19) in Verbindung steht.

10. Einrichtung nach Anspruch 7, **dadurch gekennzeichnet, dass** um das axiale Bauteil (140) aus Außenmantel (130) und Innenrohr (131) mehrere Kolben-Zylindereinheiten (145) angeordnet sind, von denen die Kolbenstangen der Kolben mittelbar mit dem Außenmantel (130) verbunden und die Zylinder in der dritten Schwimmkörper-Vorrichtung (128) angeordnet sind.

11. Einrichtung nach mindestens einem der vorhergehenden Ansprüche, **dadurch gekennzeichnet, dass** die zweite Schwimmkörper-Vorrichtung (19, 119) mit dem Außenmantel (30, 130) bewegungsschlüssig verbunden ist.

12. Einrichtung nach mindestens einem der vorhergehenden Ansprüche, **dadurch gekennzeichnet, dass** der Zylinder der Kolben-Zylinder-Einheit (32, 132) der ersten Schwimmkörper-Vorrichtung (11, 111) mit dem Außenmantel (30, 130) beziehungsweise der zweiten Schwimmkörper-Vorrichtung (19, 119) verbunden ist.

13. Einrichtung nach mindestens einem der vorhergehenden Ansprüche, **dadurch gekennzeichnet, dass** die zweite Schwimmkörper-Vorrichtung (19, 119) und die dritte Schwimmkörper-Vorrichtung (28, 128) über eine Ketten- oder Seilanordnung (27, 127) miteinander verbunden sind.

14. Einrichtung nach mindestens einem der vorhergehenden Ansprüche, **dadurch gekennzeichnet, dass** die dritte Schwimmkörper-Vorrichtung (128) über eine Hydraulikeinheit (151) mit der Ankeranordnung (137) verbunden ist.

15. Einrichtung nach Anspruch 14, **dadurch gekennzeichnet, dass** die Hydraulikeinheit (151) einen Kolben (153) aufweist, dessen Kolbenstange (152) mit der Ankeranordnung (137) verbunden ist und der innerhalb eines Hydraulikzylinders bewegbar ist, der mit einer Betriebskammer in der dritten Schwimmkörper-Vorrichtung (128) in Wirkverbindung steht.

## Claims

1. Device (10, 110) for producing mechanical and/or electrical energy from the wave energy of water comprises floating body apparatuses (11, 19, 28; 111, 119, 128) that pivot back and forth partially above and partially below a middle water line (8, 108) and/or lift and lower themselves and are connected to each other in a pivotable and/or longitudinally moveable manner, and whereby a first floating body apparatus (11, 111) comprises a buoyant body (12, 112) and a weight body (13, 113) having exterior wings (15, 115) and is connected in an articulated manner by way of a ball joint or cardan linkage (18, 118) to an axial, preferably telescope-like component (40, 140), so that the wave energy can be converted into mechanical and/or electrical energy due to the movement between the first floating body apparatus (11, 111) and the axial component (40, 140); a second floating body apparatus (19, 119) is equipped with a preferably ring-shaped weight body (20, 120), which can be moved radially back and forth between an upper cover plate (24', 124') and a lower bottom plate (24, 124) in relation to the axial component (40, 140), thereby converting the wave energy into mechanical and/or electrical energy; and a third floating body apparatus (28, 128) is arranged at least partially around the axial component (40, 140) and is provided with a buoyant body (29, 129) and connected to a mooring assembly (37, 137), wherein the third floating body apparatus (28, 128) is held and connected in an axially moveable manner relative to the first floating body apparatus (11, 111) and is provided with a hydraulic unit (32, 32'; 132) converting the relative axial movement.

2. Device according to claim 1, **characterised in that** the first floating body apparatus (11, 111) is connected to move in a tilting fashion with the second floating body apparatus (19, 119) by means of piston/cylinder units (25, 26; 125, 126) arranged around the respective periphery.

3. Device according to claim 1 or 2, **characterised in that** the first floating body apparatus (11) is provided with an upper buoyant body (13) which attaches to the linkage (18) and with a second lower ring-shaped buoyant body (14).

4. Device according to at least one of the claims 1 to 3, **characterised in that**, on the second floating body apparatus (19), the radially moving weight body (20) is equipped with permanent magnets (21) on one or both front sides and the cover plate (24') and/or the bottom plate (24) is, or are, respectively, provided with magnetic coils.

5. Device according to at least one of the claims 1 to 3, **characterised in that** piston/cylinder units (145) distributed around the periphery are provided on the second floating body apparatus (119) between the radially moving weight body (120) and the axial component (140).

6. Device according to at least one of the foregoing claims, **characterised in that** the second floating body apparatus (19) is provided with an upper and a lower buoyant body (22, 23).

7. Device according to at least one of the foregoing claims, **characterised in that** the axially aligned telescopic component (40, 140) has a tubular outer casing (30, 130) which is solidly connected to the linkage (18, 118) of the first floating body apparatus (11, 111), and an inner tube (31, 131) which is solidly connected to the third floating body apparatus (28, 128), wherein outer casing (30, 130) and inner tube (31, 131) can move axially in relation to each other.

8. Device according to claim 7, **characterised in that** at least one piston of a piston/cylinder unit (32, 132), whose cylinder is arranged immovably at least partially in the third floating body apparatus (28, 128), is connected for constrained motion with the outer casing (30, 130).

9. Device according to claim 8, **characterised in that**, inside the outer casing (30) and connected for constrained motion with said casing, a piston rod (32') is arranged whose piston (32) can move axially inside a chamber (33') of the inner tube (31), wherein the chamber (33') is filled with a hydraulic medium (33) and is connected at both ends with an operating space in the second floating body apparatus (19).

10. Device according to claim 7, **characterised in that**, around the axial component (140) comprising outer casing (130) and inner tube (131), several piston/cylinder units (145) are arranged, of which the piston rods of the pistons are connected indirectly with the outer casing (130) and the cylinders are arranged in the third floating body apparatus (128).

11. Device according to at least one of the foregoing claims, **characterised in that** the second floating body apparatus (19, 119) is connected with constrained motion with the outer casing (30, 130).

12. Device according to at least one of the foregoing claims, **characterised in that** the cylinder of the piston/cylinder unit (32, 132) of the first floating body apparatus (11, 111) is connected with the outer casing (30, 130) and respectively to the second floating body apparatus (19, 119).

13. Device according to at least one of the foregoing claims, **characterised in that** the second floating body apparatus (19, 119) and the third floating body apparatus (28, 128) are connected to each other via a chain or cable arrangement (27, 127).

14. Device according to at least one of the foregoing claims, **characterised in that** the third floating body apparatus (128) is connected with the mooring assembly (137) via a hydraulic unit (151).

15. Device according to claim 14, **characterised in that** the hydraulic unit (151) has a piston (153) whose piston rod (152) is connected with the mooring assembly (137) and which is movable inside a hydraulic cylinder which is connected to work with an operating chamber in the third floating body apparatus (128).

## Revendications

1. Système (10, 110) servant à produire de l'énergie mécanique et/ou électrique à partir de l'énergie de la houle, avec des dispositifs flottants (11, 19, 28; 111, 119, 128) qui effectuent un mouvement pendulaire et/ou montent et descendent partiellement au-dessus et partiellement en dessous d'une ligne de flottaison moyenne (8, 108) et qui sont reliés les uns aux autres de manière à pouvoir pivoter et/ou effectuer un mouvement longitudinal,
et sachant qu'un premier dispositif flottant (11, 111) présente un flotteur (12, 112) et un contrepoids (13, 113) muni d'ailettes extérieures (15, 115), et est relié de manière articulée à un élément axial (40, 140) de préférence télescopique par l'intermédiaire d'une articulation sphérique ou à la Cardan (18, 118), de sorte que l'énergie de la houle peut être transformée en énergie mécanique et/ou électrique à partir du mouvement entre le premier dispositif flottant (11, 111) et l'élément axial (40, 140) ; qu'un deuxième dispositif flottant (19, 119) est équipé d'un contrepoids (20, 120) de préférence annulaire, qui peut effectuer un mouvement de va-et-vient radial par rapport à l'élément axial (40, 140) entre une plaque de recouvrement supérieure (24', 124') et une plaque de base inférieure (24, 124) et transforme ainsi l'énergie de la houle en énergie mécanique et/ou électrique ; et qu'un troisième dispositif flottant (28, 128) est disposé au moins partiellement autour de l'élément axial (40, 140), est pourvu d'un flotteur (29, 129) et est relié à un système d'ancrage (37, 137), sachant que le troisième dispositif flottant (28, 128) est relié et maintenu à déplacement axial par rapport au premier dispositif flottant (11, 111) et est pourvu d'une unité hydraulique (32, 32'; 132) transformant le mouvement relatif axial.

2. Système selon la revendication 1, **caractérisé en ce que** le premier dispositif flottant (11, 111) est relié au deuxième dispositif flottant (19, 119) en étant mobile en basculement au moyen d'unités piston-cylindre (25, 26; 125, 126) disposées au-dessus du pourtour respectif.

3. Système selon la revendication 1 ou 2, **caractérisé en ce que** le premier dispositif flottant (11) est doté d'un flotteur supérieur (13), qui reçoit l'articulation (18), et d'un deuxième flotteur annulaire inférieur (14).

4. Système selon au moins une des revendications 1 à 3, **caractérisé en ce que**, sur le deuxième dispositif flottant (19), le contrepoids radialement mobile (20) est équipé d'aimants permanents (21) su un côté frontal ou sur les deux, et la plaque de recouvrement (24') et/ou la plaque de base (24) est ou sont pourvues de bobines magnétiques.

5. Système selon au moins une des revendications 1 à 3, **caractérisé en ce qu'**il est prévu sur le deuxième dispositif flottant (119) des unités piston-cylindre (145) qui sont réparties sur le pourtour entre le contrepoids radialement mobile (120) et l'élément axial (140).

6. Système selon au moins une des revendications précédentes, **caractérisé en ce que** le deuxième dispositif flottant (19) est pourvu d'un flotteur supérieur (22) et d'un flotteur inférieur (23).

7. Système selon au moins une des revendications précédentes, **caractérisé en ce que** l'élément télescopique orienté axialement (40, 140) présente une enveloppe extérieure tubulaire (30, 130), qui est fixement reliée à l'articulation (18, 118) du premier dispositif flottant (11, 111), et un tube intérieur (31, 131) qui est fixement relié au troisième dispositif flottant (28, 128) sachant que l'enveloppe extérieure (30, 130) et le tube intérieur (31, 131) sont axialement mobiles l'un par rapport à l'autre.

8. Système selon la revendication 7, **caractérisé en ce qu'**au moins un piston d'une unité piston-cylindre (32, 132), dont le cylindre est disposé au moins pour partie sans possibilité de déplacement dans le troisième dispositif flottant (28, 128), est lié en déplacement à l'enveloppe extérieure (30, 130).

9. Système selon la revendication 8, **caractérisé en ce qu'**une tige de piston (32') est disposée à l'intérieur de l'enveloppe extérieure (30) et lui est liée en déplacement, et son piston de levée (32) est mobile axialement à l'intérieur d'une chambre (33') du tube intérieur (31), sachant que la chambre (33') est remplie d'un fluide hydraulique (33) et communique aux deux extrémités avec une chambre de service dans le deuxième dispositif flottant (19).

10. Système selon la revendication 7, **caractérisé en ce que** plusieurs unités piston-cylindre (145) sont disposées autour de l'élément axial (140) constitué d'une enveloppe extérieure (130) et d'un tube intérieur (131), unités dont les tiges des pistons sont indirectement reliées à l'enveloppe extérieure (130) et dont les cylindres sont disposés dans le troisième dispositif flottant (128).

11. Système selon au moins une des revendications précédentes, **caractérisé en ce que** le deuxième dispositif flottant (19, 119) est lié en déplacement à l'enveloppe extérieure (30, 130).

12. Système selon au moins une des revendications précédentes, **caractérisé en ce que** le cylindre de l'unité piston-cylindre (32, 132) du premier dispositif flottant (11, 111) est relié à l'enveloppe extérieure (30, 130) ou au deuxième dispositif flottant (19, 119).

13. Système selon au moins une des revendications précédentes, **caractérisé en ce que** le deuxième dispositif flottant (19, 119) et le troisième dispositif flottant (28, 128) sont reliés entre eux par l'intermédiaire d'un système à chaîne ou à câble (27, 127).

14. Système selon au moins une des revendications précédentes, **caractérisé en ce que** le troisième dispositif flottant (128) est relié au système d'ancrage (137) par l'intermédiaire d'une unité hydraulique (151).

15. Système selon la revendication 14, **caractérisé en ce que** l'unité hydraulique (151) présente un piston (153) dont la tige de piston (152) est reliée au système d'ancrage (137) et qui est mobile à l'intérieur d'un vérin hydraulique qui est fonctionnellement relié à une chambre de service dans le troisième dispositif flottant (128).
